# EUROPEAN PATENT APPLICATION

(11) **EP 4 852 140 A1**
(43) Date of publication of application: **09.12.2026**
(21) Application number: 24938570.9
(22) Date of filing: 04.11.2024
(51) Int. Cl.: H01M 10/613, H01M 10/6563

(54) **BATTERY AND ELECTRIC DEVICE**

(30) Priority: 13.05.2024 CN 202410591330
(71) Applicant: Contemporary Amperex Technology Co., Limited, Ningde, Fujian 352100 (CN)
(72) Inventor: CHEN, Guize, Ningde, Fujian 352100 (CN); LI, Yanheng, Ningde, Fujian 352100 (CN)
(74) Representative: Ran, Handong
(86) International application number: PCT/CN2024/129752
(87) International publication number: WO 2025/236562

(57) **Abstract**

A battery and an electric device. The battery (1000) comprises: battery cells (100), the battery cells (100) being cylindrical battery cells; and an air duct member (300), wherein the air duct member (300) is integrated, air ducts (301) are defined inside the air duct member (300), positioning recesses (302) configured to be fitted with the battery cells (100) are provided at the outer periphery of the air duct member (300), and each positioning recess (302) forms an arc-shaped recess, so that the recess wall of the positioning recess (302) corresponds in shape to part of the outer peripheral surface of the corresponding battery cell (100).

## Description

### CROSS-REFERENCE TO RELATED APPLICATIONS

This application is based on and claims priority to Chinese Patent Application No. 202410591330.6, filed on May 13, 2024, which is incorporated herein by reference in its entirety.

### TECHNICAL FIELD

This application relates to the field of batteries, and in particular, to a battery and an electric apparatus.

### BACKGROUND

Energy conservation and emission reduction are key to the sustainable development of the automotive industry. Electric vehicles have become an important part of the sustainable development of the automotive industry due to their advantages of energy conservation and environmental friendliness. For electric vehicles, battery technology is another important factor concerning their development.

A battery cell is usually provided in a housing, and an end member is provided between the housing and the battery cell. A blower is provided on the end member, and the blower blows air toward the battery, thereby regulating a temperature of the battery cell. However, providing the blower in the housing without a specific passage affects temperature regulation efficiency.

### SUMMARY

In view of the above problem, this application provides a battery and an electric apparatus, to improve temperature regulation efficiency during use of the battery.

According to a first aspect, this application provides a battery, including a battery cell, where the battery cell is a cylindrical battery cell; and an air duct member, where the air duct member is an integral piece, an air duct is defined in an interior of the air duct member, an outer periphery of the air duct member is provided with a positioning groove configured to cooperate with the battery cell, and the positioning groove is formed as an arc groove with a groove wall of the positioning groove corresponding in shape to a part of an outer peripheral surface of the battery cell.

In the technical solution of the embodiments of this application, positioning of the battery cell is achieved, and an independent air duct is formed to provide a heat exchange space, which facilitates temperature regulation of the battery cell and improves heat exchange efficiency. The air duct member is an integral piece, which has a simple structure, high structural strength, and a stable overall structure, and is easy to manufacture and form.

In some embodiments, the air duct member includes a bracket body and a plurality of positioning members, the air duct is defined in an interior of the bracket body, the plurality of positioning members are spaced apart on an exterior of the bracket body and connected to the bracket body, and at least one positioning groove is defined on a side of each positioning member facing away from the air duct. In the above technical solution, the plurality of positioning members are spaced apart on the exterior of the bracket body, reducing materials used for the air duct member. This reduces cost and reduces a weight of the air duct member, facilitating lightweight design of the battery.

In some embodiments, the bracket body forms in an annular shape and defines the air duct open at two ends in a first direction, the plurality of positioning members are spaced apart along a circumferential direction of the bracket body, and each positioning member extends along the first direction. In the above technical solution, the battery cell better exchanges heat with the air duct member, such that in the extending direction of the air duct, each battery cell exchanges heat with the air duct member more uniformly. This enables the fan to blow out heat in the air duct in a timely manner, improving heat exchange efficiency, and further facilitating regulation and control of the internal temperature of the battery.

In some embodiments, the bracket body includes two first bracket segments arranged opposite to each other and two second bracket segments arranged opposite to each other, the first bracket segments and the second bracket segments are alternately arranged and connected to each other, and a width dimension of the second bracket segment is smaller than a width dimension of the first bracket segment. In the above technical solution, the bracket body is formed in a shape of rectangular ring. By providing the bracket body in a shape of rectangular ring, a space occupied by the bracket body is reduced, while a maximum number of battery cells are positioned, improving an energy density of the battery. An interior space occupied by the air duct is also be reduced, and distances between most of the battery cells and the center of the air duct are reduced, so as to improve the heat dissipation effect.

In some embodiments, at least one positioning member is provided on a side of the second bracket segment facing away from the other second bracket segment and connected to the second bracket segment and the first bracket segments, and a plurality of the positioning grooves are defined on the at least one positioning member. In the above technical solution, positioning of a plurality of battery cells is achieved. Thus, a weight of the air duct member is reduced, and a plurality of battery cells may be arranged, thereby improving the energy density of the battery.

In some embodiments, the air duct member further includes a plurality of heat dissipation members, the heat dissipation members are provided inside the air duct, the heat dissipation members are connected to the bracket body, and the plurality of heat dissipation members are spaced apart from each other and/or intersect with each other. In the above technical solution, heat exchange efficiency is improved, and structural strength of the air duct member is increased, improving stability of the overall structure.

In some embodiments, the heat dissipation members are in a shape of rib, and the heat dissipation members are connected to an inner wall surface of the bracket body. In the above technical solution, heat transferred to the bracket body may be transferred to the heat dissipation members. In this case, heat of the battery cell is transferred into the air duct more uniformly, improving heat exchange efficiency.

In some embodiments, the heat dissipation member includes a main heat dissipation rib and an auxiliary heat dissipation rib, the main heat dissipation rib is connected to two opposite sides of the inner wall surface of the bracket body, and the auxiliary heat dissipation rib is provided on the main heat dissipation rib and spaced apart from the bracket body. In the above technical solution, the main heat dissipation rib and the auxiliary heat dissipation rib increase a heat dissipation area of the heat dissipation ribs in the air duct, improving the heat dissipation effect.

In some embodiments, the auxiliary heat dissipation rib is perpendicular to the main heat dissipation rib. In the above technical solution, structures of the heat dissipation ribs are simple and are easy to manufacture and form.

In some embodiments, the auxiliary heat dissipation rib is inclined with respect to the main heat dissipation rib. In the above technical solution, in a certain space, a dimension of the auxiliary heat dissipation rib may be increased, which facilitates heat dissipation and improves heat dissipation efficiency.

In some embodiments, the heat dissipation members extend along an extending direction of the positioning members, and the heat dissipation members and the positioning members are arranged opposite to each other on inner and outer sides of the bracket body respectively. In the above technical solution, the heat of the battery cell may be better transferred to the heat dissipation member, such that in the extending direction of the heat dissipation member, each battery cell exchanges heat with the heat dissipation member more uniformly. Under the action of the fan, heat on the heat dissipation members is blown out in a timely manner, improving heat exchange efficiency, and further facilitating regulation and control of the internal temperature of the battery.

In some embodiments, the bracket body is further provided with a fastening post protruding into the air duct, and the fastening post extends at least to an end portion of the bracket body and defines a fastening hole. In the above technical solution, a fastener may pass through the fastening hole to fasten the fastening post to the housing or the fan of the battery, achieving fixed mounting of the air duct member in the battery.

In some embodiments, the air duct extends along the first direction, two ends of the bracket body in the first direction are provided with flanges extending in a direction away from the air duct, and the positioning members are spaced apart from the flanges. In the above technical solution, the dimension of the end portions of the bracket body is increased to facilitate fastening of the bracket body without increasing the overall thickness of the bracket body, avoiding an increase in the weight of the air duct member caused by an increase in the thickness of the bracket body. The flanges are spaced apart from the positioning members, which reduces the probability of interference between the flanges and the battery cell, facilitating arrangement of the overall structure. Moreover, the positioning members are spaced apart from the flanges. In this case, a length of the positioning member is smaller than a length of the bracket body, which shortens the length of the positioning member to some extent. While positioning of the battery cell is achieved, the weight of the air duct member is reduced, so that a design requirement for lightweight is satisfied.

In some embodiments, a side of at least one flange facing away from the positioning member defines a sealing groove, and the sealing groove is configured to accommodate a sealing member. In the above technical solution, the flange is in sealing cooperation with the housing of the battery through the sealing member to ensure relative sealing of the air duct, reducing a probability of air leakage at the connection between the air duct member and the housing. In this way, air blown by the fan enters the air duct, improving the heat dissipation effect.

In some embodiments, the air duct member is an aluminum profile. In the above technical solution, the aluminum profile allows the air duct member to have a small weight and a high strength. Moreover, the aluminum profile has good thermal conductivity, which promotes heat conduction. It facilitates heat transfer of the battery cell to the air duct, which facilitates rapid heat dissipation under the action of the fan. Compared with high-end metal materials, aluminum has a relatively lower price, and therefore is cost-effective.

In some embodiments, the battery further includes a housing, where the battery cell and the air duct member are provided in the housing, and the battery cell is attached to the groove wall of the positioning groove. In the above technical solution, the air duct member implements positioning of the battery cell, and is provided with an independent air duct to provide a heat exchange space for the battery cell, which facilitates temperature regulation of the battery and improves heat exchange efficiency.

In some embodiments, a fan is further included, where the fan is fastened in the housing and fixedly connected to the air duct member. In the above technical solution, the fan is fixedly connected to the air duct member, thereby reducing a probability of misalignment between the fan and the air duct member, allowing air blown by the fan to enter the air duct, and improving the stability of the overall structure.

In some embodiments, the housing includes a first end plate, the fan and the air duct member are provided on two opposite sides of the first end plate, one end of the air duct member is in sealing cooperation with the first end plate and fixedly connected to the fan through a fastener, and the first end plate is provided with a first air passage opening communicating the air duct and the fan. In the above technical solution, the air duct member and the fan may be isolated to some extent to facilitate mounting and positioning of the two. In addition, the first air passage opening is provided on the first end plate, allowing air from the fan to blow into the air duct, achieving airflow circulation. The flange of the air duct member may be in sealing cooperation with the first end plate through the sealing member, achieving sealing at the connection between the first end plate and the air duct member, reducing the probability of air leakage, and further improving heat exchange efficiency.

In some embodiments, the housing further includes a second end plate and a cover, the second end plate and the first end plate are located at two opposite ends of the air duct member, the second end plate is provided with a second air passage opening, a part of the cover is located on a side of the second end plate facing away from the air duct member and in sealing cooperation with the second end plate, and a part of the cover is fixedly connected to and in sealing cooperation with the air duct member through the second air passage opening. In the above technical solution, sealing at the connection between the cover and the air duct member and sealing at the connection between the cover and the second end plate are ensured, reducing the probability of air leakage. Air entering the air duct may be discharged to the outside through a third air passage opening, achieving airflow circulation. In addition, fixed mounting of the air duct member is achieved, reducing the probability of misalignment of the air duct member.

According to a second aspect, this application provides an electric apparatus, including the battery in the above embodiments.

The above description is only an overview of the technical solutions of this application. To understand the technical means of this application more clearly, implementation may be carried out in accordance with the content of the description. To make the above and other objects, features, and advantages of this application more obvious and understandable, specific embodiments of this application are specially described below.

### BRIEF DESCRIPTION OF DRAWINGS

Various other advantages and benefits will become apparent to those of ordinary skill in the art by reading the following detailed description of preferred embodiments. The drawings are only for the purpose of illustrating the preferred embodiments and are not to be construed as limitations to this application. Moreover, throughout the drawings, the same reference signs designate the same parts. In the drawings:
FIG. 1 is a schematic diagram of an air duct member provided in some embodiments of this application;
FIG. 2 to FIG. 4 are schematic diagrams of the air duct member provided in FIG. 1 from different perspectives;
FIG. 5 is a schematic diagram of an air duct member provided in other embodiments of this application;
FIG. 6 is a schematic diagram of an air duct member provided in still other embodiments of this application;
FIG. 7 is a schematic diagram of a battery provided in some embodiments of this application;
FIG. 8 is a cross-sectional view taken along line A-A in FIG. 7;
FIG. 9 is a cross-sectional view taken along line B-B in FIG. 7;
FIG. 10 is an exploded view of a battery provided in some embodiments of this application; and
FIG. 11 is a schematic diagram of an electric apparatus provided in some embodiments of this application.

### Reference signs:

battery 1000, electric apparatus 2000, battery cell 100, housing 200, first portion 210, second portion 220, air duct member 300, air duct 301, positioning groove 302;
bracket body 10, first bracket segment 11, second bracket segment 12, fastening post 13, flange 14, sealing groove 15, positioning member 20, heat dissipation member 30, main heat dissipation rib 31, auxiliary heat dissipation rib 32; and
fan 40, first end plate 50, first air passage opening 51, second end plate 60, second air passage opening 61, cover 70, third air passage opening 71.

### DESCRIPTION OF EMBODIMENTS

To make the objectives, technical solutions, and advantages of the embodiments of this application clearer, the technical solutions in the embodiments of this application are described clearly with reference to the drawings in the embodiments of this application. It is clear that the described embodiments are some rather than all embodiments of this application. All other embodiments obtained by those of ordinary skill in the art based on the embodiments of this application without creative efforts shall fall within the protection scope of this application.

Unless otherwise defined, all technical and scientific terms used in this application have the same meanings as commonly understood by those skilled in the art of this application. The terms used in the specification of this application are only for the purpose of describing specific embodiments and are not intended to limit this application. The terms "include" and "have" and any variations thereof in the description and claims of this application and the above description of the drawings are intended to cover non-exclusive inclusion. The terms "first", "second", and the like in the description and claims of this application or in the above drawings are used to distinguish different objects, rather than to describe a specific order or a priority relationship.

Reference to "an embodiment" in this application means that a particular feature, structure, or characteristic described with reference to the embodiment may be included in at least one embodiment of this application. Reference to this phrase in the specification does not necessarily refer to the same embodiment, nor is it an independent or alternative embodiment mutually exclusive with other embodiments.

In the description of this application, it should be noted that, unless otherwise clearly specified and limited, the terms "mount", "join", "connect", and "attach" should be understood in a broad sense. For example, it may be a fixed connection, a detachable connection, or an integral connection; it may be a direct connection, an indirect connection through an intermediate medium, or it may be internal communication between two elements. For those of ordinary skill in the art, the specific meanings of the above terms in this application may be understood according to specific circumstances.

The term "and/or" in this application is only an association relationship describing associated objects, representing that three relationships may exist. For example, A and/or B may represent: only A exists, both A and B exist, and only B exists. In addition, the character "/" in this application generally indicates that the associated objects are in an "or" relationship.

In the embodiments of this application, the same reference signs denote the same parts, and for brevity, detailed descriptions of the same parts are omitted in different embodiments. It should be understood that the dimensions such as thickness, length, and width of various components in the embodiments of this application shown in the drawings, as well as the overall dimensions such as thickness, length, and width of the integrated apparatus, are only exemplary descriptions, and should not constitute any limitation on this application.

"A plurality of" in this application means two or more (including two).

In this application, a battery refers to a single physical module including one or more battery cells to provide a higher voltage and capacity. For example, the battery mentioned in this application may include a battery module, a battery pack, or the like. Some batteries may include a housing for packaging one or more battery cells or a plurality of battery modules. The housing prevents liquid or other foreign matters from affecting charge or discharge of the battery cells. Certainly, some other batteries may not include the housing, and are directly arranged in a battery mounting compartment of an electric apparatus.

In this application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, rectangular, or in other shapes, which is not limited in the embodiments of this application. Battery cells are generally classified into three types based on packaging methods: cylindrical battery cell, prismatic battery cell, and pouch battery cell, which is not limited in the embodiments of this application.

For example, the battery cell may include a casing, an electrode assembly, and an electrolyte, where the casing is configured to accommodate the electrode assembly and the electrolyte. The electrode assembly is formed by a positive electrode plate, a negative electrode plate, and a separator. Operation of the battery cell mainly relies on movement of metal ions between the positive electrode plate and the negative electrode plate. The positive electrode plate includes a positive electrode current collector and a positive electrode active material layer. The positive electrode active material layer is applied to a surface of the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab. A lithium-ion battery is used as an example. A material of the positive electrode current collector may be aluminum, and the positive electrode active material may be lithium cobalt oxide, lithium iron phosphate, ternary lithium, lithium manganate, or the like.

The negative electrode plate includes a negative electrode current collector and a negative electrode active material layer. The negative electrode active material layer is applied to the surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. A material of the negative electrode current collector may be copper, and the negative electrode active material may be carbon, silicon, or the like. To ensure that no fusing occurs when a large current passes, a plurality of positive electrode tabs are stacked together, and a plurality of negative electrode tabs are stacked together.

A material of the separator may be PP (polypropylene, polypropylene), PE (polyethylene, polyethylene), or the like. In addition, the electrode assembly may be a wound structure or a stacking structure. The embodiments of this application are not limited thereto.

A pole or the like connected to the tab may be provided on the battery cell to serve as an electrical connection portion of the battery cell. Moreover, a pressure relief portion may be provided on the battery cell. When the internal pressure of the battery cell is excessively high (such as thermal runaway), the pressure relief portion is configured to release internal substances (such as gas, liquid, and particulate matter) of the battery cell to reduce the internal pressure of the battery cell, avoiding rapid pressurization inside the battery cell, which may lead to dangerous accidents such as fire and explosion of the battery cell. For example, the pressure relief portion may be an explosion-proof valve, an explosion-proof sheet, or the like.

In some electric apparatuses, batteries are used for power supply. The battery includes a housing and a battery cell. The battery cell is usually provided in the housing, and an end member is provided between the housing and the battery cell. A blower is provided on the end member, and the blower blows air toward the battery cell, thereby regulating a temperature of the battery cell. However, providing the blower in the housing without a specific passage affects temperature regulation efficiency.

To this end, this application proposes a battery, including a battery cell and an air duct member. The battery cell 100 is a cylindrical battery cell, and the air duct member is an integral piece. An air duct is defined in an interior of the air duct member, and an outer periphery of the air duct member is provided with a positioning groove configured to cooperate with the battery cell. The positioning groove is formed as an arc groove, such that a groove wall of the positioning groove corresponds in shape to a part of an outer peripheral surface of the battery cell.

In the air duct member having the above structure, positioning of the battery cell is achieved, and an independent air duct is formed to provide a heat exchange space, which facilitates temperature regulation of the battery cell and improves heat exchange efficiency. The air duct member is an integral piece, which has a simple structure, high structural strength, and a stable overall structure, and is easy to manufacture and form.

The battery 1000 disclosed in the embodiments of this application may be used in, but is not limited to, an electric apparatus 2000 such as a vehicle, ship, or aircraft. A power supply system of the electric apparatus 2000 includes the battery 1000 and the like disclosed in this application, to ensure the safety and reliability of the electric apparatus 2000.

For example, the electric apparatus 2000 disclosed in the embodiments of this application may be, but is not limited to, a vehicle, a mobile phone, a tablet, a laptop, a ship, a spacecraft, an electric toy, an electric tool, and the like. The vehicle may be a fuel-powered vehicle, a gas vehicle, a new energy vehicle, or a rail vehicle. The new energy vehicle may be a pure electric vehicle, a hybrid vehicle, an extended-range vehicle, or the like. The spacecraft includes airplane, rocket, space shuttle, spaceship, and the like. The electric toy includes fixed or mobile electric toys, such as a game console, an electric vehicle toy, an electric ship toy, an electric airplane toy, and the like. The electric tool includes an electric metal cutting tool, an electric grinding tool, an assembly electric tool, and an electric railway tool, such as an electric drill, an electric grinder, an electric wrench, an electric screwdriver, an electric hammer, an impact drill, a concrete vibrator, and an electric planer.

Hereinafter, a battery 1000 according to an embodiment of this application is described with reference to the drawings.

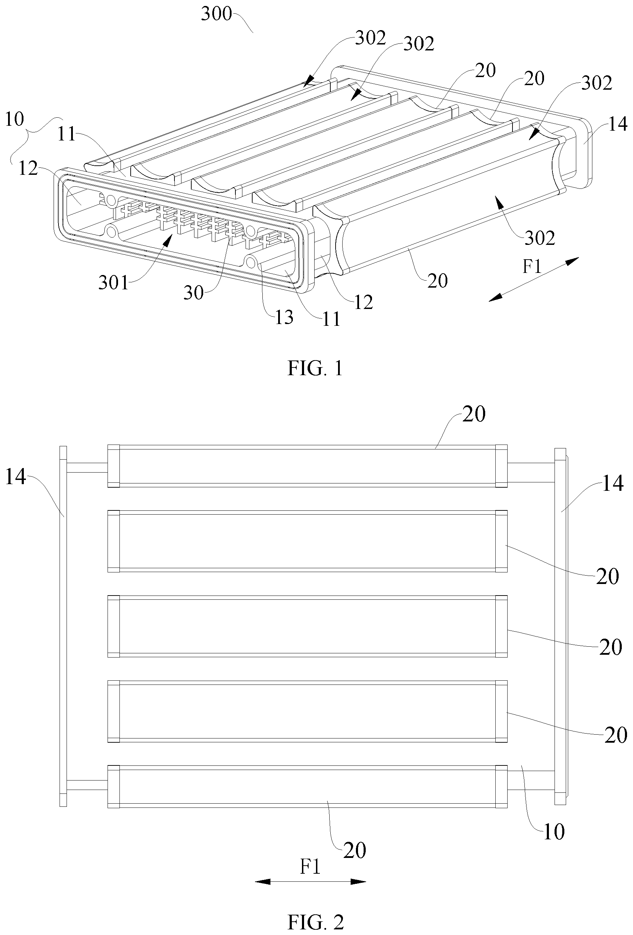

As shown in FIG. 1 to FIG. 10, according to some embodiments of this application, the battery 1000 includes a battery cell 100, where the battery cell 100 is a cylindrical battery cell; and an air duct member 300, where the air duct member 300 is an integral piece, air duct 301 is defined in an interior of the air duct member 300, an outer periphery of the air duct member 300 is provided with a positioning groove 302 configured to cooperate with the battery cell 100, and the positioning groove 302 is formed as an arc groove with a groove wall of the positioning groove 302 corresponding in shape to a part of an outer peripheral surface of the battery cell 100.

As shown in FIG. 1, an air duct member 300 is independently provided. The air duct member 300 may be mounted in the housing 200 of the battery 1000. Since the air duct member 300 defines an air duct 301, an air supply duct is provided for a fan 40. That is, the air duct may be arranged opposite to the fan 40, such that air blown by the fan 40 enters the air duct 301. In this way, the airflow is more concentrated, and a temperature regulation efficiency is high.

The outer periphery of the air duct member 300 is provided with the positioning grooves 302, and the outer peripheral surface of the battery cell 100 corresponds in shape to the groove wall of the positioning groove 302, such that the battery cell 100 is attached to the wall surface of the positioning groove 302. In this way, the air duct member 300 achieves positioning of the battery cell 100, so as to facilitate mounting and fixation of the battery cell 100, eliminate the need for an additional positioning structure, and simplify the internal structure of the battery 1000.

The battery cell 100 is a cylindrical battery cell, and the positioning groove 302 is formed as an arc groove. In this case, the battery cell 100 is attached to the wall surface of the positioning groove 302, facilitating positioning of the battery cell 100.

In addition, the air duct member 300 exhibits a certain heat transfer effect. The battery cell 100 is provided at the positioning groove 302, and the battery cell 100 is in contact with the air duct member 300, so as to achieve heat exchange between the heat of the battery cell 100 and the heat of the air duct member 300. For example, heat generated by the battery cell 100 may be transferred to the air duct member 300, and the fan 40 blows air into the air duct 301, to blow heat of the battery cell 100 out of the battery from the air duct 301. In this way, heat dissipation of the battery cell 100 is achieved, further facilitating control of the temperature of the battery cell 100.

The air duct member 300 according to the embodiments of this application achieves positioning of the battery cell 100, and forms an independent air duct 301 to provide a heat exchange space, which facilitates temperature regulation of the battery cell 100 and improves heat exchange efficiency. The air duct member 300 is an integral piece, which has a simple structure, high structural strength, and a stable overall structure, and is easy to manufacture and form.

As shown in FIG. 1 and FIG. 2, in some embodiments, the air duct member 300 includes a bracket body 10 and a plurality of positioning members 20. The air duct 301 is defined in an interior of the bracket body 10. The plurality of positioning members 20 are spaced apart from each other on an exterior of the bracket body 10 and connected to the bracket body 10, and a side of each positioning member 20 facing away from the air duct 301 defines at least one positioning groove 302.

As shown in FIG. 1, the bracket body 10 is roughly annular. An inner side of the bracket body 10 defines the air duct 301. The positioning members 20 protrude from an outer side of the bracket body 10, and an outer side of the positioning member 20 defines the positioning groove 302. Heat generated by the battery cell 100 may be transferred to the positioning members 20, and then transferred to the bracket body 10. The fan 40 blows air into the air duct 301 in the interior of the bracket body 10, so that the heat of the battery cell 100 is blown out of the battery 1000 from the air duct 301. In this way, heat dissipation of the battery cell 100 is achieved, further facilitating control of the temperature of the battery cell 100.

As shown in FIG. 1, one positioning groove 302 is defined on some positioning members 20, cooperating with one battery cell 100, and a plurality of positioning grooves 302 are defined on some positioning members 20 located at an end portion, thereby positioning a plurality of battery cells 100. Full utilization of the structural space is achieved with no interference between the plurality of battery cells 100, thereby increasing an energy density of the battery 1000.

The plurality of positioning members 20 are spaced apart on the exterior of the bracket body 10, reducing materials used for the air duct member 300. This reduces cost and reduces a weight of the air duct member 300, facilitating lightweight design of the battery 1000.

In other embodiments, the outer surface of the bracket body 10 is not additionally provided with a protruding positioning member, and the positioning groove 302 may be directly formed on the outer surface of the bracket body 10, further simplifying the structure of the air duct member 30.

As shown in FIG. 1, in some embodiments, the bracket body 10 is annular, and defines the air duct 301 open at two ends in a first direction F1. The plurality of positioning members 20 are spaced apart along a circumferential direction of the bracket body 10, and each positioning member 20 extends along the first direction F1.

As shown in FIG. 1, FIG. 3, and FIG. 4, the air duct member 30 extends along the first direction F1, and two ends of the air duct member 30 are provided with openings, thereby forming the air duct 301 open at two ends. Each positioning member 20 extends along the first direction F1. In this way, the battery cell 100 better exchanges heat with the air duct member 30, such that in the extending direction of the air duct 301, each battery cell 100 exchanges heat with the air duct member 30 more uniformly. This enables the fan 40 to blow out heat in the air duct 301 in a timely manner, improving heat exchange efficiency, and further facilitating regulation and control of the internal temperature of the battery 1000.

As shown in FIG. 1, in some embodiments, the bracket body 10 includes two first bracket segments 11 arranged opposite to each other and two second bracket segments 12 arranged opposite to each other. The first bracket segments 11 and the second bracket segments 12 are alternately arranged and connected to each other. A width dimension of the second bracket segment 12 is smaller than a width dimension of the first bracket segment 11.

As shown in FIG. 1, along the circumferential direction of the bracket body 10, the first bracket segment 11, the second bracket segment 12, the first bracket segment 11, and the second bracket segment 12 are arranged in sequence. Two opposite ends of the first bracket segment 11 are connected to two second bracket segments 12 respectively. Two opposite ends of the second bracket segment 12 are connected to the first bracket segments 11 respectively. The bracket body 10 is in a shape of a rectangular ring.

A width dimension direction of the second bracket segment 12 is a dimension of the second bracket segment 12 in the circumferential direction of the bracket body 10, and a width dimension direction of the first bracket segment 11 is a dimension of the first bracket segment 11 in the circumferential direction of the bracket body 10. The width dimension of the second bracket segment 12 is smaller than the width dimension of the first bracket segment 11. A plurality of positioning members 20 may be provided on the exterior of the two first bracket segments 11, thereby positioning a plurality of battery cells 100. In addition, one positioning member 20 may be provided on the exterior of the second bracket segment 12, and a dimension of the positioning member 20 may be increased for provision of a plurality of positioning grooves 302, thereby positioning a plurality of battery cells 100. By providing the bracket body 10 in a shape of rectangular ring, a space occupied by the bracket body 10 is reduced, while a maximum number of battery cells 100 are positioned, improving the energy density of the battery 1000. An interior space occupied by the air duct 301 is also reduced, and distances between most of the battery cells 100 and the center of the air duct 301 are reduced, so as to improve the heat dissipation effect.

As shown in FIG. 1, in some embodiments, at least one positioning member 20 is provided on a side of one second bracket segment 12 facing away from the other second bracket segment 12 and is connected to the second bracket segment 12 and the first bracket segments 11, and a plurality of the positioning grooves 302 are defined on at least one positioning member 20.

As shown in FIG. 1, one positioning member 20 is provided on the exterior of the second bracket segment 12, and the positioning member 20 may extend to the exterior of the first bracket segment 11, thereby increasing the dimension of the positioning member 20 for defining a plurality of positioning grooves 302, thereby positioning a plurality of battery cells 100. Thus, a weight of the air duct member 300 is reduced, and a plurality of battery cells 100 may be arranged, thereby improving the energy density of the battery 1000.

As shown in FIG. 1 and FIG. 3 to FIG. 6, in some embodiments, the air duct member 300 further includes a plurality of heat dissipation members 30, the heat dissipation members 30 are provided in the air duct 301, the heat dissipation members 30 are connected to the bracket body 10, and the plurality of heat dissipation members 30 are spaced apart from each other and/or intersect with each other.

As shown in FIG. 1, the heat dissipation members 30 are provided in the air duct 301, and the heat dissipation members 30 are connected to the bracket body 10, so that heat transferred from the battery cells 100 to the bracket body 10 is further transferred to the heat dissipation members 30.

Since the heat dissipation members 30 are provided in the air duct 301, when the fan 40 blows air into the air duct 301, the heat on the heat dissipation members 30 is blown away in a timely manner, improving heat exchange efficiency, and further facilitating regulation and control of the internal temperature of the battery 1000.

The plurality of heat dissipation members 30 may be spaced apart from each other, or the plurality of heat dissipation members 30 may intersect with each other, or some heat dissipation members 30 may be spaced apart and the other heat dissipation members 30 may intersect with each other.

By providing the heat dissipation members 30 connected to the bracket body 10 in the air duct 301, structural strength of the air duct member 300 is increased, improving the stability of the overall structure.

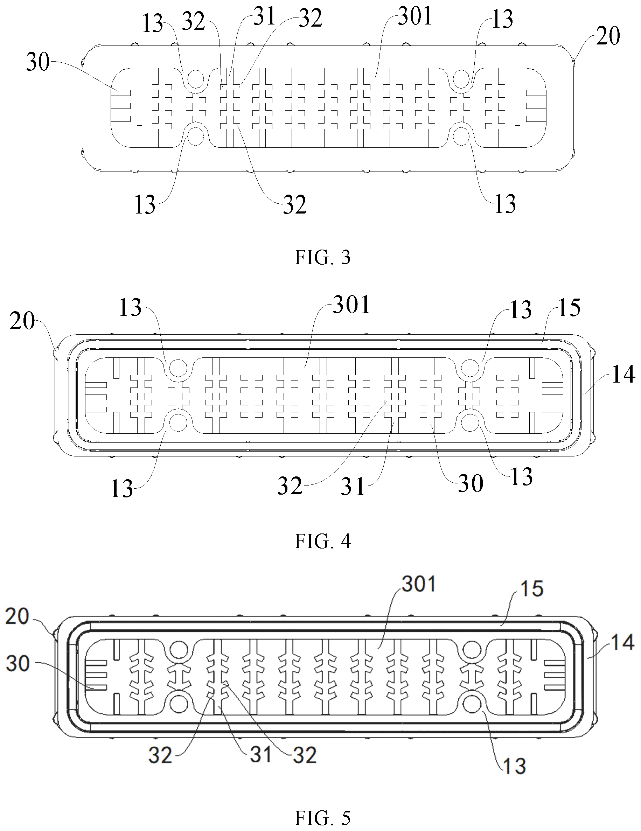

As shown in FIG. 3 to FIG. 6, in some embodiments, the heat dissipation members 30 are in a shape of rib, and the heat dissipation members 30 are connected to the inner wall surface of the bracket body 10.

As shown in FIG. 3 to FIG. 6, the heat dissipation members 30 are heat dissipation ribs, and the heat dissipation members 30 extend along the first direction F1. For some heat dissipation members 30, one side is connected to the inner wall surface of the bracket body 10, and another side extends into the air duct 301. For some heat dissipation members 30, both sides are connected to two parts of the inner wall surface of the bracket body 10, so that heat transferred to the bracket body 10 may be transferred to the heat dissipation members 30. In this case, heat of the battery cell 100 is transferred into the air duct 301 more uniformly, improving heat exchange efficiency.

As shown in FIG. 3 to FIG. 6, in some embodiments, the heat dissipation member 30 includes a main heat dissipation rib 31 and an auxiliary heat dissipation rib 32. The main heat dissipation rib 31 is connected to two opposite sides of the inner wall surface of the bracket body 10, and the auxiliary heat dissipation rib 32 is provided on the main heat dissipation rib 31, and the auxiliary heat dissipation rib 32 is spaced apart from the bracket body 10.

Heat transferred from the battery cell 100 to the bracket body 10 may be first transferred to the main heat dissipation rib 31, and further transferred to the auxiliary heat dissipation rib 32. The main heat dissipation rib 31 and the auxiliary heat dissipation rib 32 increase a heat dissipation area of the heat dissipation ribs in the air duct 301, improving the heat dissipation effect.

As shown in FIG. 3, FIG. 4, and FIG. 6, in some embodiments, the auxiliary heat dissipation rib 32 is perpendicular to the main heat dissipation rib 31. Structures of the heat dissipation ribs are simple and are easy to manufacture and form.

As shown in FIG. 5, in some embodiments, the auxiliary heat dissipation rib 32 is inclined with respect to the main heat dissipation rib 31. Thus, in a certain space, a dimension of the auxiliary heat dissipation rib 32 may be increased, which facilitates heat dissipation and improves heat dissipation efficiency.

As shown in FIG. 1, in some embodiments, the heat dissipation members 30 extend along an extending direction of the positioning members 20, and the heat dissipation members 30 and the positioning members 20 are arranged opposite to each other on inner and outer sides of the bracket body 10 respectively.

As shown in FIG. 1, the heat dissipation members 30 extends along the first direction F1, the positioning member 20 extends along the first direction F1, and the positioning groove 302 extends along the first direction F1. Correspondingly, the battery cell 100 attaching to the positioning member 20 extends along the first direction F1. The heat dissipation member 30 and the positioning member 20 are arranged opposite to each other on the inner and outer sides of the bracket body 10 respectively. In this way, the heat of the battery cell 100 may be better transferred to the heat dissipation member 30, such that in the extending direction of the heat dissipation member 30, each battery cell 100 exchanges heat with the heat dissipation member 30 more uniformly. Under the action of the fan 40, heat on the heat dissipation members 30 is blown out in a timely manner, improving heat exchange efficiency, and further facilitating regulation and control of the internal temperature of the battery 1000.

As shown in FIG. 1 and FIG. 3 to FIG. 6, in some embodiments, the bracket body 10 is further provided with a fastening post 13 protruding into the air duct 301, and the fastening post 13 extends at least to the end portion of the bracket body 10 and defines a fastening hole.

As shown in FIG. 1, the inner side of the bracket body 10 is provided with the fastening post 13, and the fastening post 13 extends along the first direction F1. Two ends of one fastening post 13 may extend to two ends of the bracket body 10 respectively. Alternatively, a plurality of fastening posts 13 may be provided, and each fastening post 13 is correspondingly provided at the end portion of the bracket body 10. The fastening post 13 is provided with a fastening hole, and a fastener may pass through the fastening hole to fasten the fastening post 13 to the housing 200 or the fan 40 of the battery 1000, achieving fixed mounting of the air duct member 300 in the battery 1000.

It should be noted that the fastening hole herein may be a threaded hole, and the fastener may be a bolt, thereby facilitating connection of the fastener. The threaded hole may be manufactured after the air duct member 300 is formed through integral manufacture.

As shown in FIG. 1 and FIG. 2, in some embodiments, the air duct 301 extends along the first direction F1, two ends of the bracket body 10 in the first direction F1 are provided with flanges 14 extending in a direction away from the air duct 301, and the positioning member 20 is spaced apart from the flanges 14.

As shown in FIG. 1 and FIG. 2, the two ends of the bracket body 10 are provided with the flanges 14 extending outward, increasing the dimension of the end portions of the bracket body 10 to facilitate fastening of the bracket body 10 without increasing the overall thickness of the bracket body 10, avoiding an increase in the weight of the air duct member 300 caused by an increase in the thickness of the bracket body 10. The flanges 14 are spaced apart from the positioning members 20, which reduces the probability of interference between the flanges 14 and the battery cell 100, facilitating arrangement of the overall structure.

Moreover, the positioning members 20 are spaced apart from the flanges 14. In this case, a length of the positioning member 20 is smaller than a length of the bracket body 10, which shortens the length of the positioning member 20 to some extent. While positioning of the battery cell 100 is achieved, the weight of the air duct member 300 is reduced, so that a design requirement for lightweight is satisfied.

As shown in FIG. 4, in some embodiments, a side of at least one flange 14 facing away from the positioning member 20 defines a sealing groove 15, and the sealing groove 15 is configured to accommodate a sealing member.

In this way, the flange 14 is in sealing cooperation with the housing 200 of the battery 1000 through the sealing member to ensure relative sealing of the air duct 301, reducing a probability of air leakage at the connection between the air duct member 300 and the housing 200. In this way, air blown by the fan 40 enters the air duct 301, improving the heat dissipation effect.

In some embodiments, the air duct member 300 is an aluminum profile.

The aluminum profile allows the air duct member 300 to have a small weight and a high strength. Moreover, the aluminum profile has good thermal conductivity, which promotes heat conduction. It facilitates heat transfer of the battery cell 100 to the air duct 301, which facilitates rapid heat dissipation under the action of the fan 40. Compared with high-end metal materials, aluminum has a relatively lower price, and therefore is cost-effective.

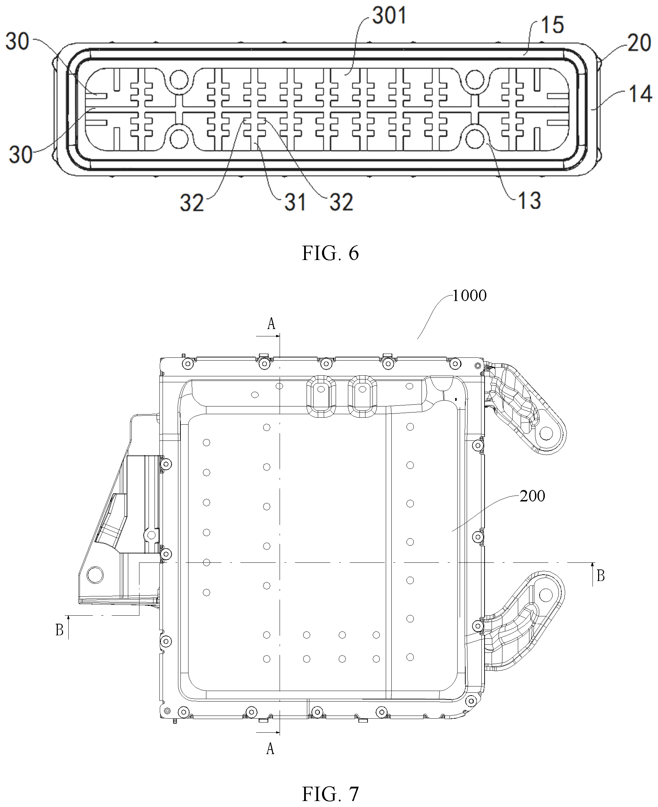

As shown in FIG. 7 to FIG. 10, the battery 1000 according to the embodiments of this application further includes a housing 200. A battery cell 100 and an air duct member 300 are provided in the housing 200. The battery cell 100 is attached to a groove wall of a positioning groove 302.

The housing 200 includes a first portion 210 and a second portion 220, a cavity is formed between the first portion 210 and the second portion 220, and the battery cell 100 and the air duct member 300 are provided in the cavity.

In this case, the battery cell 100 is in contact with the air duct member 300, to achieve heat exchange between the battery cell 100 and the air duct member 300. Heat generated by the battery cell 100 may be transferred to the air duct member 300, and when the fan 40 blows air into the air duct 301, heat of the battery cell 100 may be blown out of the battery from the air duct 301, achieving heat dissipation of the battery cell 100, and further facilitating control of the temperature of the battery cell 100.

In the battery 1000 according to the embodiments of this application, the air duct member 300 implements positioning of the battery cell 100, and is provided with an independent air duct 301 to provide a heat exchange space for the battery cell 100, which facilitates temperature regulation of the battery 1000 and improves heat exchange efficiency.

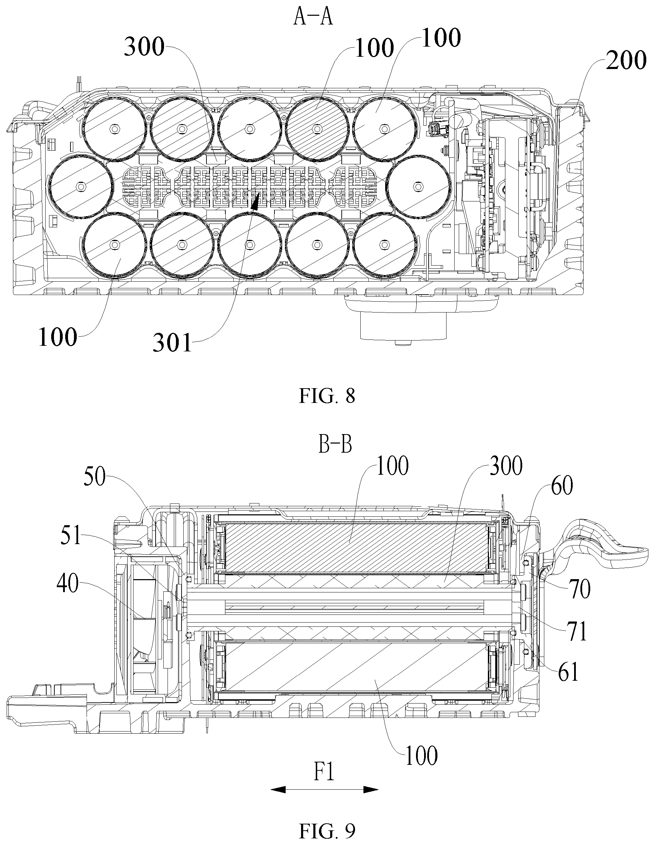

As shown in FIG. 9, in some embodiments, the battery 1000 further includes a fan 40, where the fan 40 is fastened in the housing 200 and the fan 40 is fixedly connected to the air duct member 300, thereby reducing a probability of misalignment between the fan 40 and the air duct member 300, allowing air blown by the fan 40 to enter the air duct 301, and improving the stability of the overall structure.

As shown in FIG. 9, in some embodiments, the housing 200 includes a first end plate 50, the fan 40 and the air duct member 300 are provided on two opposite sides of the first end plate 50, one end of the air duct member 300 is in sealing cooperation with the first end plate 50, the air duct member 300 is fixedly connected to the fan 40 through a fastener, and the first end plate 50 is provided with a first air passage opening 51 communicating the air duct 301 and the fan 40.

In this case, the air duct member 300 and the fan 40 may be isolated to some extent to facilitate mounting and positioning of the two. In addition, the first air passage opening 51 is provided on the first end plate 50, allowing air from the fan 40 to blow into the air duct 301, achieving airflow circulation. The flange 14 of the air duct member 300 may be in sealing cooperation with the first end plate 50 through the sealing member, achieving sealing at the connection between the first end plate 50 and the air duct member 300, reducing the probability of air leakage, and further improving heat exchange efficiency.

As shown in FIG. 9, in some embodiments, the housing 200 further includes a second end plate 60 and a cover 70. The second end plate 60 and the first end plate 50 are located at two opposite ends of the air duct member 300, and the second end plate 60 is provided with a second air passage opening 61. The cover 70 is provided with a third air passage opening 71, a part of the cover 70 is located on a side of the second end plate 60 facing away from the air duct member 300, the cover 70 is in sealing cooperation with the second end plate 60, a part of the cover 70 is fixedly connected to the air duct member 300 through the second air passage opening 61, and the cover 70 is in sealing cooperation with the air duct member 300. Thus, sealing at the connection between the cover 70 and the air duct member 300 and sealing at the connection between the cover 70 and the second end plate 60 are ensured, reducing the probability of air leakage. Air entering the air duct 301 may be discharged to the outside through the third air passage opening 71, achieving airflow circulation. In addition, fixed mounting of the air duct member 300 is achieved, reducing the probability of misalignment of the air duct member 300.

The electric apparatus 2000 according to the embodiments of the second aspect of this application includes the battery 1000 according to the embodiments of the first aspect of this application. Thus, with the battery 1000, the safety and reliability of the electric apparatus 2000 are improved.

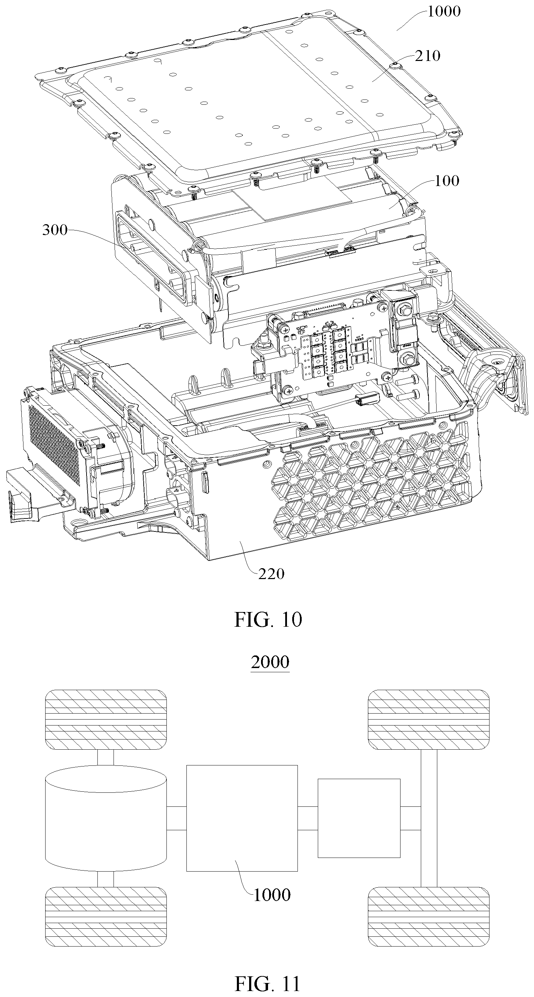

Optionally, as shown in FIG. 11, when the battery 1000 is used in a vehicle, the battery 1000 may be provided at a bottom, front, or rear of the vehicle, or may be provided inside the vehicle. The battery 1000 may be used for power supply of the vehicle. For example, the battery 1000 may serve as an operating power source of the vehicle. The vehicle may further include a controller and a motor. The controller is configured to control the battery 1000 to supply power to the motor, for example, for operating power requirements during starting, navigation, and driving of the vehicle. The battery 1000 may also supply power to components inside the vehicle.

A battery 1000 and a vehicle having the same according to an embodiment of this application are described below with reference to the drawings.

As shown in FIG. 1 to FIG. 4 and FIG. 7 to FIG. 10, the battery 1000 includes a housing 200, a battery cell 100, a fan 40, and an air duct member 300. The battery cell 100 is a cylindrical battery cell.

The air duct member 300 is an integral aluminum profile, and the air duct member 30 extends along the first direction F1. Both ends of the air duct member 30 are provided with openings, thereby forming the air duct 301 open at both ends. Specifically, the air duct member 300 includes a bracket body 10, a plurality of positioning members 20, and a plurality of heat dissipation members 30. The bracket body 10 is in a shape of a rectangular ring, and both ends of the bracket body 10 are provided with flanges 14 extending outward. The flange 14 defines a sealing groove 15.

The plurality of positioning members 20 are provided on the exterior of the bracket body 10, the plurality of heat dissipation members 30 are provided inside the bracket body 10, and each positioning member 20 and each heat dissipation member 30 extend along the first direction F1.

One positioning groove 302 is defined on an outer side of some positioning members 20, and a plurality of positioning grooves 302 are defined on outer sides of some positioning members 20. The positioning groove 302 is formed as an arc groove. In this way, the battery cell 100 may be attached to the wall surface of the positioning groove 302.

Each heat dissipation member 30 includes a main heat dissipation rib 31 and an auxiliary heat dissipation rib 32. The main heat dissipation rib 31 is connected to two opposite sides of the bracket body 10. The auxiliary heat dissipation rib 32 is provided on the main heat dissipation rib 31. The auxiliary heat dissipation rib 32 is perpendicular to the main heat dissipation rib 31. The auxiliary heat dissipation rib 32 is spaced apart from the bracket body 10.

The housing 200 includes a first end plate 50, a second end plate 60, and a cover 70.

The second end plate 60 and the first end plate 50 are arranged opposite to each other. The first end plate 50 is provided with a first air passage opening 51. The second end plate 60 is provided with a second air passage opening 61. The cover 70 is provided with a third air passage opening 71. The air duct member 300 may be mounted between the first end plate 50 and the second end plate 60. The flange 14 of the bracket body 10 is in sealing cooperation with the first end plate 50 through a sealing member.

A part of the cover 70 is located on a side of the second end plate 60 facing away from the air duct member 300, and the cover 70 is in sealing cooperation with the second end plate 60. A part of the cover 70 is fixedly connected to the air duct member 300 through the second air passage opening 61, and the cover 70 is in sealing cooperation with the flange 14 of the bracket body 10 through a sealing member.

The fan 40 is provided on a side of the first end plate 50 facing away from the air duct member 300, and corresponds to a position of the first air passage opening 51, so that air blown by the fan 40 enters the air duct 301 through the first air passage opening 51.

The battery cell 100 is in contact with the air duct member 300, and heat generated by the battery cell 100 may be transferred to the air duct member 300. The fan 40 blows air into the air duct 301, so as to discharge heat of the battery cell 100 from the air duct 301 to the outside through the third air passage opening 71 to achieve airflow circulation. In this way, heat dissipation of the battery cell 100 is achieved, which helps control a temperature of the battery cell 100.

Finally, it should be noted that the above embodiments are only used to illustrate the technical solutions of this application, rather than to limit them. Although this application has been described in detail with reference to the foregoing embodiments, those of ordinary skill in the art should understand that they can still modify the technical solutions described in the foregoing embodiments, or make equivalent substitutions for some or all of the technical features therein. These modifications or substitutions do not make the essence of the corresponding technical solutions depart from the scope of the technical solutions of the embodiments of this application, and they should all be covered by the scope of the claims and specification of this application. In particular, as long as there is no structural conflict, the technical features mentioned in the embodiments may be combined in any manner. This application is not limited to the specific embodiments disclosed herein, but includes all technical solutions falling within the scope of the claims.

## Claims

1. A battery (1000), comprising:
a battery cell (100), wherein the battery cell (100) is a cylindrical battery cell; and
an air duct member (300), wherein the air duct member (300) is an integral piece, an air duct (301) is defined in an interior of the air duct member (300), and an outer periphery of the air duct member (300) is provided with a positioning groove (302) configured to cooperate with the battery cell (100), wherein the positioning groove (302) is formed as an arc groove with a groove wall of the positioning groove (302) corresponding in shape to a part of an outer peripheral surface of the battery cell (100).

2. The battery (1000) according to claim 1, wherein the air duct member (300) comprises a bracket body (10) and a plurality of positioning members (20), wherein the air duct (301) is defined in an interior of the bracket body (10), the plurality of positioning members (20) are spaced apart on an exterior of the bracket body (10) and connected to the bracket body (10), and at least one positioning groove (302) is defined on a side of each positioning member (20) facing away from the air duct (301).

3. The battery (1000) according to claim 2, wherein the bracket body (10) forms in an annular shape and defines the air duct (301) open at two ends in a first direction, the plurality of positioning members (20) are spaced apart along a circumferential direction of the bracket body (10), and each positioning member (20) extends along the first direction.

4. The battery (1000) according to claim 3, wherein the bracket body (10) comprises two first bracket segments (11) arranged opposite to each other and two second bracket segments (12) arranged opposite to each other, wherein the first bracket segments (11) and the second bracket segments (12) are alternately arranged and connected to each other, and a width dimension of the second bracket segment (12) is smaller than a width dimension of the first bracket segment (11).

5. The battery (1000) according to claim 4, wherein at least one positioning member (20) is provided on a side of the second bracket segment (12) facing away from the other second bracket segment (12) and is connected to the second bracket segment (12) and the first bracket segments (11), and a plurality of the positioning grooves (302) are defined on the at least one positioning member (20).

6. The battery (1000) according to any one of claims 2 to 5, wherein the air duct member (300) further comprises a plurality of heat dissipation members (30), wherein the heat dissipation members (30) are provided inside the air duct (301), the heat dissipation members (30) are connected to the bracket body (10), and the plurality of heat dissipation members (30) are spaced apart from each other and/or intersect with each other.

7. The battery (1000) according to claim 6, wherein the heat dissipation members (30) are in a shape of a rib, and the heat dissipation members (30) are connected to an inner wall surface of the bracket body (10).

8. The battery (1000) according to claim 7, wherein the heat dissipation member (30) comprises a main heat dissipation rib (31) and an auxiliary heat dissipation rib (32), wherein the main heat dissipation rib (31) is connected to two opposite sides of the inner wall surface of the bracket body (10), and the auxiliary heat dissipation rib (32) is provided on the main heat dissipation rib (31) and spaced apart from the bracket body (10).

9. The battery (1000) according to claim 8, wherein the auxiliary heat dissipation rib (32) is perpendicular to the main heat dissipation rib (31).

10. The battery (1000) according to claim 8, wherein the auxiliary heat dissipation rib (32) is inclined with respect to the main heat dissipation rib (31).

11. The battery (1000) according to claim 6, wherein the heat dissipation members (30) extend along an extending direction of the positioning members (20), and the heat dissipation members (30) and the positioning members (20) are arranged opposite to each other on inner and outer sides of the bracket body (10) respectively.

12. The battery (1000) according to any one of claims 2 to 11, wherein the bracket body (10) is further provided with a fastening post (13) protruding into the air duct (301), and the fastening post (13) extends at least to an end portion of the bracket body (10) and defines a fastening hole.

13. The battery (1000) according to any one of claims 2 to 12, wherein the air duct (301) extends along the first direction, two ends of the bracket body (10) in the first direction are provided with flanges (14) extending in a direction away from the air duct (301), and the positioning members (20) are spaced apart from the flanges (14).

14. The battery (1000) according to claim 13, wherein a side of at least one flange (14) facing away from the positioning member (20) defines a sealing groove (15), and the sealing groove (15) is configured to accommodate a sealing member.

15. The battery (1000) according to any one of claims 1 to 14, wherein the air duct member (300) is an aluminum profile.

16. The battery (1000) according to any one of claims 1 to 15, further comprising a housing (200), wherein the battery cell (100) and the air duct member (300) are provided in the housing (200), and the battery cell (100) is attached to the groove wall of the positioning groove (302).

17. The battery (1000) according to claim 16, further comprising a fan (40), wherein the fan (40) is fastened in the housing (200) and fixedly connected to the air duct member (300).

18. The battery (1000) according to claim 17, wherein the housing (200) comprises a first end plate (50), the fan (40) and the air duct member (300) are provided on two opposite sides of the first end plate (50), one end of the air duct member (300) is in sealing cooperation with the first end plate (50) and fixedly connected to the fan (40) through a fastener, and the first end plate (50) is provided with a first air passage opening (51) communicating the air duct (301) and the fan (40).

19. The battery (1000) according to claim 18, wherein the housing (200) further comprises a second end plate (60) and a cover (70), the second end plate (60) and the first end plate (50) are located at two opposite ends of the air duct member (300), the second end plate (60) is provided with a second air passage opening (61), the cover (70) is provided with a third air passage opening (71), a part of the cover (70) is located on a side of the second end plate (60) facing away from the air duct member (300) and in sealing cooperation with the second end plate (60), and a part of the cover (70) is fixedly connected to and in sealing cooperation with the air duct member (300) through the second air passage opening (61).

20. An electric apparatus, comprising the battery (1000) according to any one of claims 1 to 19.
